# EUROPÄISCHE PATENTANMELDUNG

(11) **EP 1 875 795 A1**
(43) Veröffentlichungstag der Anmeldung: **09.01.2008**
(21) Anmeldenummer: 07012792.3
(22) Anmeldetag: 29.06.2007
(51) Int. Cl.: A01G 9/10, A01G 31/00, A01K 63/04, B01J 39/14

(54) **Partikel zur Bildung eines Bodens**

(30) Priorität: 30.06.2006 DE 202006010172 U; 17.01.2007 DE 102007002504; 05.06.2007 DE 102007026228
(71) Anmelder: Legat, Heiner, 92703 Krummennaab (DE)
(72) Erfinder: Legat, Heiner, 92703 Krummennaab (DE)
(74) Vertreter: Haft, von Puttkamer, Berngruber

(57) **Zusammenfassung**

Die Erfindung betrifft Partikel (2, 20) zur Bildung eines Bodens (2), insbesondere in einem Aquarium (1) oder in einem Pflanzgefäß (10), wobei die Partikel (2,20) Zeolith-Partikel sind und mit einem farbigen, Öffnungen (4) aufweisenden Überzug versehen sein können.

## Beschreibung

Die vorliegende Erfindung betrifft Partikel zur Bildung eines Bodens.

Üblicherweise werden Bodenbeläge in einem Aquarium durch Sand oder Kies gebildet. In einem derartigen Bodenbelag wurzeln die in das Aquarium eingesetzten Pflanzen. Ein Problem eines derartigen Bodenbelages besteht darin, dass sich an ihm sehr schnall Algen ausbilden, sodass er relativ schnell gereinigt bzw. ersetzt werden muss. Dies bedeutet aber einen Eingriff in das Aquarium, der für die Bewohner desselben nachteilig ist.

Aus der DE 37 09 860 A1 ist die Verwendung eines feinteiligen ionenaustauschenden Natriumzeoiths gemeinsam mit feinteiligem Kalziumhydroxid zur Reinigung und/oder Reinhaltung von stehenden, bewegten und/oder mäßig durchströmten Gewässern, die insbesondere den Zutritt von Licht und gegebenenfalls Luft ausgesetzt sind, bekannt. Dabei kann das Natriumzeolith gemeinsam mit dem Kalziumhydroxid im Rahmen der Aquaristik durch Beimischung zum Aquariumsand eingesetzt werden, um ein Algenwachstum im Aquarium zu verlangsamen. Die Teilchengröße des Natriumzeoliths liegt bei maximal 100 µm, ist jedoch vorzugsweise kleiner als 50µm.

Die Aufgabe der vorliegenden Erfindung besteht darin, Partikel zu schaffen, die selbst den Boden eines Aquariums oder eines Pflanzengefäßes so gestalten, dass ein ausgezeichnetes Pflanzenwachstum bewirkt wird.

Diese Aufgabe wird durch Partikel zur Bildung eines Bodens mit den Merkmalen des Patentanspruches 1 gelöst.

Der wesentliche Vorteil der vorliegenden Erfindung besteht darin, dass bei der Verwendung in einem Aquarium die Teilchengröße der erfindungsgemäßen Partikel so groß gewählt ist, dass die Partikel selbst als Bodenbelag in ein Aquarium eingebracht werden können. Eine umständliche Zumischung von Zeolithpulver zu einem aus Sand oder Kies bestehenden Bodenbelag ist daher nicht erforderlich. Ein weiterer wesentlicher Vorteil einer Weiterbildung der vorliegenden Erfindung besteht darin, dass die den Bodenbelag bildenden Zeolith-Partikel auch eingefärbt sein können, sodass in einem Aquarium durch eine gezielte farbige Ausgestaltung des Bodenbelages bestimmte ästhetische und dekorative Wirkungen sowie ggf. auch eine Anpassung an den natürlichen Lebensraum bestimmter Aquarienbewohner erzielbar sind. Vorteilhafterweise wird das Algenwachstum im Aquarium wirksam verlangsamt bzw. unterbunden. Vorteilhafte Verfahren zur Herstellung der erfindungsgemäßen, eingefärbten Zeolith-Partikel gehen aus den Unteransprüchen 7 bis 12 hervor.

Bei der Verwendung der erfindungsgemäßen Partikel in einem Pflanzgefäß besteht der wesentliche Vorteil darin, dass der dekorative Wert von Pflanzengefäßen dadurch wesentlich erhöht wird, dass ein durchsichtiges Pflanzengefäß, beispielsweise ein aus Glas bestehender Blumentopf, verwendet wird, wobei in das durchsichtige Pflanzengefäß ein gefärbtes Pflanzsubstrat, bei dem es sich vorzugsweise um einen saugfähigen Spezialstein in Kies- oder Granulatform handelt, eingebracht wird. Da das Pflanzengefäß aus einem durchsichtigen Material besteht, tritt das farbige Pflanzsubstrat optisch deutlich in Erscheinung, wodurch eine besondere dekorative Wirkung erzielt wird. Die Farbe des Pflanzsubstrates kann dabei auf die Art, z.B. die Blütenfarbe, der in dem Pflanzengefäß enthaltenen Pflanze abgestimmt oder an die jeweilige Umgebung des Pflanzengefäßes angepasst werden.

Vorteilhafterweise speichert das aus den vorliegenden Partikeln bestehende, eingefärbte Pflanzsubstrat ebenso wie an sich bekannte Hydrokultur-Substrate Wasser und Nährstoffe für die in den vorliegenden Pflanzengefäßen enthaltenen Pflanzen, sodass diese nicht täglich gegossen werden müssen. Das vorliegende Pflanzsubstrat gibt an die in den Pflanzengefäßen enthaltenen Pflanzen Wasser ab und wirkt nachhaltig als Katalysator, sodass Schadstoffe in kurzer Zeit in harmlose Bestandteile, wie z.B. Wasser und Kohlendioxid, zerlegt werden. Beispielsweise kann das vorliegende Pflanzsubstrat chlorierte und aromatische Kohlenwasserstoffe, Formaldehyd, Triethylenamin, Benzol, Dodecene, sowie aus Zigarettenrauch, Lacken, Reiniger, Kleber, Schaumstoff, Lösungsmittel und Teppichböden stammende Schadstoffe zerlegen.

Da sich das in dem durchsichtigen Pflanzengefäß enthaltene, eingefärbte Pflanzsubstrat beim Eingießen von Wasser dunkler färbt, muss erst dann gegossen werden, wenn das feuchte Pflanzsubstrat wieder seine ursprüngliche Farbe angenommen hat. Auf diese Weise kann das vorliegende Pflanzsubstrat vorteilhaft als Anzeigemittel zur Anzeige für das Vorhandensein von für die Pflanzen ausreichenden Wassermengen verwendet werden. Alternativ können aber auch die von der Hydrokultur her bekannten Wasserstandsanzeiger verwendet werden. Das vorliegende Pflanzsubstrat kann bei Verschmutzungen mit lauwarmem Wasser gereinigt werden, sodass es wieder seine ursprüngliche Farbe erhält.

Vorteilhafte Verfahren zur Herstellung der erfindungsgemäßen, eingefärbten Zeolith-Partikel gehen aus Unteransprüchen hervor.

Im folgenden werden die Erfindung und deren Ausgestaltungen im Zusammenhang mit den Figuren näher erläutert. Es zeigen:
Figur 1 ein an sich bekanntes Aquarium mit einem aus den erfindungsgemäßen Zeolith-Partikeln bestehenden Bodenbelag;
Figur 2 eine Darstellung zur Erläuterung von Verfahren zum Aufbringen eines speziellen farbigen Überzuges auf die erfindungsgemäßen Zeolith-Partikel;
Figur 3 in schematischer Darstellung ein bepflanztes, vorliegendes Pflanzengefäß in der Form eines herkömmlichen Blumentopfes; und
Figuren 4 und 5 weitere beispielhafte Formen von Pflanzengefäßen.

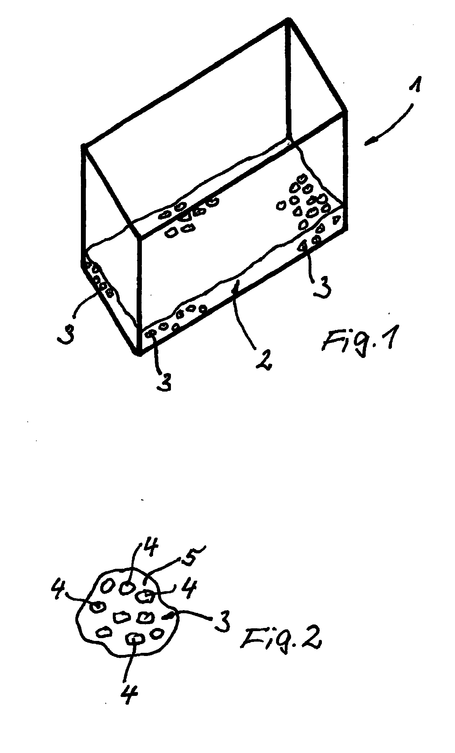

In der Figur 1 ist ein an sich bekanntes Aquarium mit 1 bezeichnet. Am Boden des Aquariums 1 befindet sich ein Bodenbelag 2, der im wesentlichen aus einzelnen Partikeln besteht, bei denen es sich erfindungsgemäß um Zeolith-Partikel 3 handelt. Die Zeolith-Partikel 3 sind in der Figur 1 stark vergrößert dargestellt. Die Korngröße der Zeolith-Partikel liegt vorzugsweise in einem Bereich von 1 bis 5 mm oder mehr. Es ist auch denkbar einem Bodengrund aus Zeolith-Partikeln dieser Größen Zeolith-Partikel zuzumischen, die eine noch größere Korngröße besitzen.

Vorteilhafterweise bilden die vorliegenden Zeolith-Partikel 3 selbst den Bodengrund, sodass sie vorzugsweise direkt (ohne Beimischung zu Sand oder Kies etc.) in das Aquarium 1 eingebracht werden können. Bei einem aus derartigen aktiven Zeolith-Partikeln 3 bestehenden Bodengrund 2 wurde in einem Test nachgewiesen, dass an der Oberfläche des Bodengrundes 2 zumindest vier Monate lang keine Algenbildung erfolgte. Auch im Wasser des Aquariums und an den Innenflächen der Scheiben desselben bildeten sich in dem genannten Zeitraum keine Algen. Außerdem führte sich auf den Bodengrund 2 ansammelnder Fischkot nicht zu unerwünschten Verschleimungen. Mit dem derart beschaffenden Bodengrund 2 ließ sich ein ausgezeichnetes Pflanzenwachstum erreichen. Auf zu häufiges Wechseln des Wassers des Aquariums zurückzuführende Schädigungen der pflanzlichen und tierischen Bewohner eines Aquariums konnten bei der Verwendung des erfindungsgemäßen Bodengrundes vermieden werden.

Bei einer besonders vorteilhaften Ausgestaltung der Erfindung sind die Zeolith-Partikel 3 eingefärbt, sodass dem Aquarium 1 mit einem entsprechenden Bodengrund 2 eine bestimmte dekorative und ästhetische Wirkung verliehen werden kann. Ggf. kann dabei auch eine Anpassung an den natürlichen Lebensraum bestimmter Aquarienbewohner erreicht werden. Dabei ist zu beachten, dass die eingefärbten Zeolith-Partikel 3 ihre reinigende und eine Algenbildung verhindernde Wirkung nur dann wirksam entfalten können, wenn der die Oberfläche der Partikel bedeckende farbige Überzug 5 bereichsweise unterbrochen ist bzw. Öffnunegn 4 aufweist, sodass das Wasser des Aquariums das Zeolithmaterial der Zeolith-Partikel 3 kontaktieren kann.

Die Herstellung solcher gefärbter Zeolith-Partikel 3 werden der gewünschten Farbe entsprechende Farbpigmente in ein beispielsweise aus Polyurethan (PU) bestehendes Schnellgießharz einer vorbestimmten Viskosität eingebracht. Als Schnellgießharz sind auch Epoxidharz (EP) oder Acrylatharze denkbar. Das mit den Farbpigmenten versehene Schnellgießharz wird vorzugsweise in einen Trommelmischer eingebracht, in dem sich die Zeolith-Partikel 3 befinden. Bei dem nachfolgenden Mischvorgang werden die tiefer liegenden Bereiche der Zeolith-Partikel 3 bei einer geeigneten Wahl der Viskosität des Schnellgießharzes nicht mit dem eingefärbten Schnellgießharz überzogen, sodass sie frei bleiben. Anders ausgedrückt kann das eingefärbte Schnellgießharz der vorgegebenen Viskosität nicht zu den tiefer liegenden Bereichen vordringen und nicht in diese eindringen. Auf diese Weise wird erreicht, dass die Zeolith-Partikel 3 nur bereichsweise mit einer glänzenden Schicht des eingefärbten Schnellgießharzes überzogen werden. Die von dem Gießharz freigebliebenen Bereiche bzw. Öffnungen des Überzuges 5 sind in der Figur 2 mit 4 bezeichnet.

Ein anderes Verfahren zur Herstellung eines matten oder glänzenden Überzuges aus einem eingefärbten Schnellgießharz besteht darin, dass ein vorzugsweise mit Farbpigmenten versetztes Schnellgießharz, vorzugsweise Polyurethan (PU), einer vorbestimmten Viskosität mit vorzugsweise H₂O versetzt und aufgeschäumt wird. Als Schnellgießharz sind auch Epoxidharz (EP) oder Acrylatharze denkbar. Beispielsweise in einem Trommelmischer werden dann die darin befindlichen Zeolith-Partikel 3 vollständig mit dem eingefärbten Schnellgießharz beschichtet, wobei die Oberflächenschicht der Zeolithpartikel 3 im Bereich der H₂O Kügelchen aufplatzt, sodassein farbiger Überzug 5 mit einer gitterartigen Netzstruktur bzw. mit Öffnungen 4 entsteht.

Beispielsweise werden als Farben natürliche Farben, wie Ocker, Grün und Blau in der Form von Farbpigmenten dem Schnellgießharz zugesetzt.

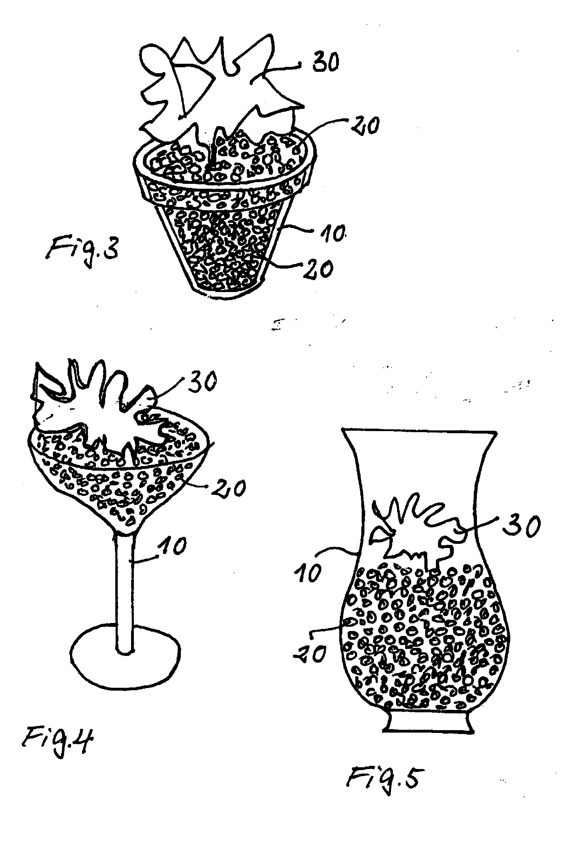

Im folgenden wird erläutert, wie die erfindungsgemäßen Partikel im Zusammenhang mit einem Pflanzgefäß verwendet werden. Gemäß Figur 3 besteht das vorliegende Pflanzengefäß 10, das beispielsweise die Form eines handelsüblichen Blumentopfes aufweist, aus einem durchsichtigen Material, vorzugsweise aus Glas oder Kunststoff. In dem Pflanzengefäß 10 ist das aus einzelnen Partikeln bestehende, farbige oder eingefärbte Pflanzsubstrat 20 enthalten, das vorzugsweise die Form eines Granulats aufweist oder sand- oder kiesförmig ausgestaltet ist. In das Pflanzsubstrat 20 ist eine Pflanze 30 eingepflanzt. Dabei wird die Pflanze 30, so wie dies von der Hydrokultur her bekannt ist, in der folgenden Weise eingepflanzt. Das Pflanzsubstrat 20 wird wenigstens 1 cm hoch auf den Boden des Pflanzengefäßes 10 eingestreut. Die Pflanze 30 wird vom Erdreich befreit und die Wurzeln werden mit Wasser abgewaschen. Die derart gereinigte Pflanze 30 wird in das Pflanzengefäß 10 eingesetzt. Das Pflanzengefäß 30 wird anschließend mit dem Pflanzsubstrat 20 gefüllt. Danach wird so lange Wasser in das Pflanzengefäß 10 eingegossen, bis das Wasser zumindest den Anfang des Wurzelballens der Pflanze 30 erreicht.

Das Pflanzsubstrat 30 weist vorzugsweise Kiesform auf und besteht aus einem saugfähigen Spezialstein, besonders vorteilhaft aus Zeolith. Beispielsweise ist das Pflanzsubstrat grün, gelb, blau, weiß oder rot eingefärbt. Auch Mischungen, die aus unterschiedlich gefärbten Pflanzsubstraten 2 hergestellt werden, sind denkbar.

Zur Erzielung von besonderen dekorativen Wirkungen können auch unterschiedlich gefärbte Pflanzsubstrate schichtförmig übereinander in dem Pflanzengefäß 10 angeordnet werden.

Es hat sich herausgestellt, dass insbesondere Zeolith-Partikel als Pflanzsubstrat 20 besonders geeignet sind, weil sie unter anderem eine antibakterielle Wirkung entfalten, die für das gesunde Wachsen von Pflanzen von großer Bedeutung ist. In das Pflanzsubstrat eingebrachte Schnittblumen halten wegen dieser antibakteriellen Wirkung sehr viel länger als in dem normalen Wasser einer Blumenvase.

Die Figur 4 zeigt ein vorliegendes Pflanzengefäß in der Form einer Sektschale.

Die Figur 5 zeigt ein vorliegendes Pflanzengefäß in der Form eines Windlichtes.

## Patentansprüche

1. Partikel zur Bildung eines Bodens, insbesondere in einem Aquarium (1) oder in einem Pflanzgefäß (10), **dadurch gekennzeichnet, dass** die Partikel (2, 20) des Bodens aus einem saugfähigen Steinmaterial bestehen oder Zeolith-Partikel sind.

2. Partikel nach Anspruch 1, **dadurch gekennzeichnet, dass** die Zeolith-Partikel selbst den Bodengrund in einem Aquarium (1) bilden.

3. Partikel nach Anspruch 2, **dadurch gekennzeichnet, dass** die Korngröße der Zeolith-Partikel (3) in einem Bereich von 1 bis 10 mm, vorzugsweise 1 bis 5 mm, liegt.

4. Partikel nach Anspruch 2 oder 3, **dadurch gekennzeichnet, dass** die Zeolith-Partikel (3) gefärbt sind.

5. Partikel nach Anspruch 4, **dadurch gekennzeichnet, dass** die Zeolith-Partikel (3) mit einem farbigen Überzug derart versehen sind, dass der Überzug Öffnungen (4) aufweist, durch die Wasser des Aquariums oder Teiches das Zeolithmaterial der Zeolith-Partikel (3) kontaktieren kann.

6. Partikel nach Anspruch 5, **dadurch gekennzeichnet, dass** die Zeolith-Partikel (3) ocker, grün oder blau gefärbt sind.

7. Verfahren zum Einfärben von Partikeln nach Anspruch 5 oder 6, **dadurch gekennzeichnet, dass** die Zeolith-Partikel (3) mit einem mit Farbpigmenten eingefärbten Gießharz einer vorbestimmten Viskosität zur Bildung eines farbigen Überzuges (5) derart gemischt werden, dass tiefer liegende Bereiche der Zeolith-Partikel (3) zur Bildung von Öffnungen (4) in dem Überzug (5) nicht von dem eingefärbten Gießharz überzogen werden.

8. Verfahren nach Anspruch 5, **dadurch gekennzeichnet, dass** die Zeolith-Partikel (3) mit einem mit Farbpigmenten eingefärbten und aufgeschäumten Gießharz einer vorbestimmten Viskosität zur Bildung eines farbigen Überzuges (5) derart gemischt werden, dass die Oberflächenschicht des Überzuges im Bereich der Schaumbläschen zur Bildung der Öffnungen (4) in dem Überzug aufplatzen.

9. Verfahren nach Anspruch 8, **dadurch gekennzeichnet, dass** das Gießharz mit Wasser versetzt und aufgeschäumt wird.

10. Verfahren nach einem der Ansprüche 7 bis 9, **dadurch gekennzeichnet, dass** die Zeolith-Partikel (3) in einem Trommelmischer mit dem Gießharz vermischt werden.

11. Verfahren nach einem der Ansprüche 7 bis 10, **dadurch gekennzeichnet, dass** als Gießharz ein Schnellgießharz verwendet wird.

12. Verfahren nach einem der Ansprüche 7 bis 11, **dadurch gekennzeichnet, dass** als Gießharz ein Polyurethanharz, ein Epoxidharz oder ein Acrylatharz verwendet wird.

13. Verwendung von Partikeln nach einem der Ansprüche 1 bis 6 zur Herstellung eines Bodengrundes in einem Aquarium oder Teich.

14. Verwendung von Partikeln, hergestellt mit einem Verfahren nach einem der Ansprüche 7 bis 12 zur Herstellung eines Bodengrundes in einem Aquarium oder Teich.

15. Pflanzengefäß mit einem aus den Partikeln nach einem der Ansprüche 1 bis 6 bestehenden Pflanzsubstrat, **dadurch gekennzeichnet, dass** das Pflanzsubstrat (20) aus einzelnen gefärbten oder farbigen Partikeln und das Pflanzengefäß (10) aus einem durchsichtigen Material bestehen.

16. Pflanzengefäß nach Anspruch 15, **dadurch gekennzeichnet, dass** es aus einem durchsichtigen Glas oder Kunststoffmaterial besteht.

17. Pflanzengefäß nach Anspruch 15 oder 16, **dadurch gekennzeichnet, dass** das Pflanzsubstrat (20) granulat, korn-, sand- oder kiesförmig ausgebildet ist.

18. Pflanzengefäß nach einem der Ansprüche 15 bis 17, **dadurch gekennzeichnet, dass** das Pflanzsubstrat (20) grün, gelb, blau, weiß, orangefarben, rot oder blau eingefärbt ist.

19. Pflanzengefäß nach einem der Ansprüche 15 bis 18, **dadurch gekennzeichnet, dass** das Pflanzsubstrat (2) aus einem saugfähigen Steinmaterial besteht.

20. Pflanzengefäß nach einem der Ansprüche 15 bis 19, **dadurch gekennzeichnet, dass** es die Form eines Blumentopfes, einer Blumenvase einer Sektschale, eines Weinglases oder eines Windlichtes aufweist.

21. Pflanzengefäß nach einem der Ansprüche 15 bis 20, **dadurch gekennzeichnet, dass** das Pflanzsubstrat (20) eine aus unterschiedlich gefärbten Partikeln gebildete Mischung ist.

22. Pflanzengefäß nach einem der Ansprüche 15 bis 21, **dadurch gekennzeichnet**, das das Pflanzsubstrat (20) aus verschiedenen, übereinander angeordneten Schichten aus unterschiedlich gefärbten Partikeln besteht.

23. Pflanzsubstrat zur Verwendung in einem durchsichtigen Pflanzengefäß (10), **dadurch gekennzeichnet, dass** es nach einem der Ansprüche 1 bis 6 hergestellte farbige oder eingefärbte Partikel umfasst.

24. Pflanzsubstrat nach Anspruch 24, **dadurch gekennzeichnet, dass** es grün, gelb, blau, orangefarben oder rot eingefärbt ist.

25. Pflanzsubstrat nach Anspruch 23 oder 24, **dadurch gekennzeichnet, dass** es granulat-, korn-, sand- oder kiesförmig ausgebildet ist.

26. Pflanzsubstrat nach einem der Ansprüche 23 bis 25, **dadurch gekennzeichnet, dass** es aus einem saugfähigen Steinmaterial besteht.

27. Pflanzsubstrat nach Anspruch 26, **dadurch gekennzeichnet, dass** es aus Zeolith besteht.
